# EUROPEAN PATENT APPLICATION

(11) **EP 4 796 612 A1**
(43) Date of publication of application: **26.08.2026**
(21) Application number: 26159371.9
(22) Date of filing: 18.02.2026
(51) Int. Cl.: C09K 5/04, C10M 171/00, C09K 5/10

(54) **REFRIGERATION OIL COMPOSITION, REFRIGERANT COMPOSITION, AND HEAT PUMP INCLUDING THE SAME; AND COOLING METHOD AND HEATING METHOD WITH THE SAME**

(30) Priority: 20.02.2025 KR 20250022327; 19.06.2025 KR 20250081298
(71) Applicant: SK Innovation Co., Ltd., Seoul 03188 (KR); SK On Co., Ltd., Seoul 03161 (KR)
(72) Inventor: KIM, Hye Ri, 34124 Daejeon (KR); KIM, Myoung Lae, 34124 Daejeon (KR); LEE, Ok Suk, 34124 Daejeon (KR); JIN, Seong Ho, 34124 Daejeon (KR); PARK, Ji Hye, 34124 Daejeon (KR); CHOI, Geun Ho, 34124 Daejeon (KR); SEO, Sang Hyup, 34124 Daejeon (KR)
(74) Representative: Prüfer & Partner mbB Patentanwälte · Rechtsanwälte

(57) **Abstract**

A refrigeration oil composition according to embodiments of the present disclosure includes a silane compound represented by Formula 1 below, wherein any one or two of R₁ to R₄ are each independently selected from C₁-C₅ alkoxy groups, and the remaining groups are each independently C₁-C₁₄ alkyl groups.

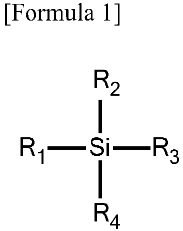

## Description

### [BACKGROUND OF THE INVENTION]

### 1. Field of the Invention

The embodiments of the present application relate to a refrigeration oil composition, a refrigerant composition, and a heat pump including the same, and cooling method, heating method with the same and use of the refrigeration oil composition.

### 2. Description of the Related Art

In an air conditioning system or a refrigeration system, a working fluid such as a refrigerant and a refrigeration oil composition may be used for heat exchange as a material capable of transferring heat. The air conditioning system may refer to a system that maintains a comfortable indoor environment by controlling the temperature, humidity, and air composition. The air conditioning system or the refrigeration system may be applied to buildings, factories, homes, vehicles, and aircraft.

Refrigeration oil composition circulates within the above-described system and may contribute to the lubrication, cooling, sealing, cleaning of mechanical components such as compressors, and adjustment of refrigerant solubility. In some sections, the refrigeration oil composition may also circulate with the refrigerant.

Examples of refrigerants include fluorocarbon compounds, and research and development are ongoing to improve their oxidation stability at high-temperature, heat transfer characteristics, and/or long-term reliability within the working fluid.

### [SUMMARY OF THE INVENTION]

An object of the present disclosure is to provide a refrigeration oil composition having improved oxidation stability at high-temperature stability, the heat transfer characteristics and long-term reliability.

Another object of the present disclosure is to provide a refrigerant composition having improved heat transfer characteristics and oxidation stability at high temperature.

Still another object of the present disclosure is to provide a heat pump including the refrigeration oil composition, which has improved the properties thereof.

A refrigeration oil composition according to an embodiment of the present disclosure includes a silane compound represented by Formula 1 below.

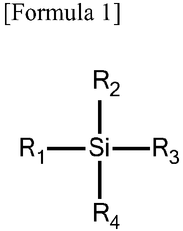

In Formula 1, any one or two of R₁ to R₄ may each independently be selected from C₁-C₅ alkoxy groups, and the remaining groups may each independently be C₁-C₁₄ alkyl groups.

In an embodiment, in Formula 1, any one or two of R₁ to R₄ may each independently be selected from the group consisting of methoxy and ethoxy groups.

In an embodiment, in Formula 1, any one or two of the remaining groups may be methyl groups, ethyl groups, or propyl groups.

In an embodiment, in Formula 1, any two of R₁ to R₄ may each independently be selected from C₁-C₃ alkoxy groups, and the remaining two may each independently be C₁-C2 linear alkyl groups or C₃-C₇ branched alkyl groups.

In an embodiment, the refrigeration oil composition may include the silane compound represented by Formula 1 in an amount of 0.1% by weight to 10% by weight based on the total weight of the refrigeration oil composition.

In an embodiment, the refrigeration oil composition may further include at least one of a base oil and an additive.

In an embodiment, the base oil may be included in an amount of 87% by weight to 99% by weight based on the total weight of the refrigeration oil composition.

In an embodiment, the base oil may include at least one selected from the group consisting of polyol ester, polyalkylene glycol, polycarbonate, alkylbenzene, polyvinyl ether, polyether, and perfluoropolyether.

In an embodiment, the additive may include at least one of a stabilizer, an antioxidant, a corrosion inhibitor, an acid scavenger, an extreme-pressure additive, and an anti-wear agent.

In an embodiment, the refrigeration oil composition may include the silane compound represented by Formula 1, the base oil, the stabilizer, the acid scavenger, and the anti-wear agent.

In an embodiment, the total acid number (TAN) may be 1 mg KOH/g or less, measured according to the ASTM D664 test method after performing a high-temperature stability evaluation under temperature conditions of 140 °C to 160 °C in accordance with the ASHRAE Standard 97 test method.

In an embodiment, the color index may be 1 or less, measured according to the ASTM D1500 test method after performing a high-temperature stability evaluation under temperature conditions of 140 °C to 160 °C in accordance with the ASHRAE Standard 97 test method.

A refrigerant composition according to an embodiment of the present disclosure includes: the above-described refrigeration oil composition; and a refrigerant including CF₃I.

In an embodiment, the refrigerant composition may further include a refrigerant other than CF₃I.

A heat pump according to an embodiment of the present disclosure includes the above-described refrigerant composition.

In an embodiment, a method for cooling by the heat pump comprises the following steps: the above described refrigerant composition is compressed through a compressor, and is bypassed to an internal condenser and an expansion valve for heating; a step wherein heat is released in an external condenser; a step of expansion through an expansion valve for cooling; and a step of reabsorbtion heat through an evaporator.

In an embodiment, a method for heating by the heat pump comprises: the above described refrigerant composition is compressed through the compressor; a step wherein heat is released in an internal condenser; a step of expansion through an expansion valve for heating; a step of absorbion of heat from an external condenser; and a step of absorbtion of heat through a cooler.

In an embodiment, the refrigeration oil composition is used for removing acid and/or water formed in the refrigerant composition, for improving oxidation stability at high-temperature, heat transfer characteristics, and/or long-term reliability.

The refrigeration oil composition according to an embodiment of the present disclosure may exhibit improved oxidation stability at high-temperature and long-term reliability.

The composition for refrigerator according to an embodiment of the present disclosure may exhibit improved heat transfer characteristics and high-temperature stability.

The heat pump according to an embodiment of the present disclosure may exhibit improved heat transfer characteristics and oxidation stability.

### [BRIEF DESCRIPTION OF THE DRAWINGS]

The above and other objects, features and advantages of the present disclosure will be more clearly understood from the following detailed description taken in conjunction with the accompanying drawings, in which:

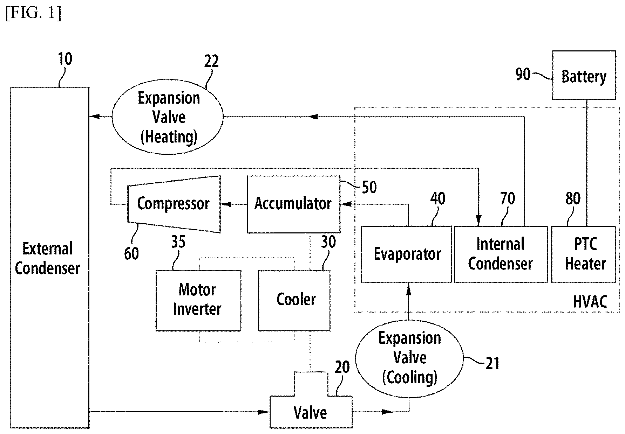

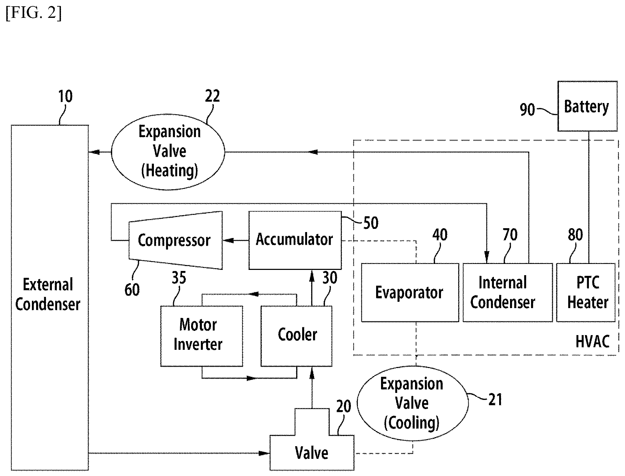

FIGS. 1 and 2 are schematic views illustrating the flow of a refrigerant for heat exchange in a cooling mode or a heating mode of a heat exchanger according to an embodiment, respectively.

### [DETAILED DESCRIPTION OF THE INVENTION]

Hereinafter, exemplary embodiments of the present disclosure will be described in detail with reference to the accompanying drawings so that those skilled in the art may readily practice the present disclosure.

The term "refrigeration oil" or "refrigeration oil composition" as used herein - both terms being meant synonymously - may refer to an oil or oil composition which adopts an oily or lipophilic phase. The refrigeration oil or refrigeration oil composition may include, besides the silane compound, an oil component, such as a lubricant or other materials disclosed herein.

The term "refrigerant composition" as used herein may refer to a mixture of the above-described refrigeration oil or refrigeration oil composition; and a refrigerant

### <Refrigeration oil composition >

A refrigeration oil or refrigeration oil composition according to an embodiment of the present disclosure includes a silane compound represented by Formula 1 below.

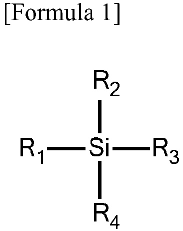

In Formula 1, any one or two of R₁ to R₄ may each independently be selected from C₁-C₅ alkoxy groups, and the remaining groups may each independently be C₁-C₁₄ alkyl groups.

Therefore, the refrigeration oil composition may exhibit improved heat transfer performance and stability at high temperature. The silane compound of Formula 1 may suppress or prevent side reactions caused by moisture, thereby reducing the total acid number (TAN) and functioning, for example, as an acid-generation inhibitor.

A silane compound having three or four alkoxy groups as functional groups bonded to the Si atom may readily undergo self-polymerization, resulting in the formation of precipitates or a change in color in the composition. This may cause a reduction in the stability and performance of the refrigeration oil composition.

In an embodiment, in Formula 1, any one or two of R₁ to R₄ may each independently be selected from the group consisting of methoxy and ethoxy groups. Accordingly, the stability of the refrigeration oil composition under high-temperature and high-pressure conditions may be further improved.

In an embodiment, in Formula 1, any one or two of the remaining groups may be methyl groups, ethyl groups, propyl groups, or branched butyl groups.

In an embodiment, in Formula 1, any one or two of the remaining groups may be methyl groups or ethyl groups.

In an embodiment, in Formula 1, any two of R₁ to R₄ may each independently be selected from C₁-C₃ alkoxy groups, and the remaining two may each independently be selected from C₁-C₂ linear alkyl groups or C₃-C₇ branched alkyl groups. The refrigeration oil composition may effectively reduce the generation of acid components even when used with highly reactive refrigerants such as CF₃I. Accordingly, stability under high-temperature and high-pressure conditions may be further improved, and chemical degradation of the refrigeration oil and compositions containing it may be suppressed even during long-term operation, thereby enhancing the durability and reliability of the entire system.

In an embodiment, any one of the remaining groups in Formula 1 may be a C₄-C₁₃ alkyl group.

In the present specification, the alkyl group may be a linear or branched alkyl group.

In an embodiment, in Formula 1, any one of R₁ to R₄ may be a C₁-C₅ alkoxy group, any two may each independently be methyl groups or ethyl groups, and the remaining one may be a C₁-C₁₄ alkyl group.

In an embodiment, in Formula 1, any one of R₁ to R₄ may be a C₁-C₃ alkoxy group, any two may each independently be methyl groups or ethyl groups, and the remaining one may be a C₃-C₁₄ alkyl group.

In an embodiment, in Formula 1, any two of R₁ to R₄ may each independently be C₁-C₅ alkoxy groups, any one may be a methyl group or an ethyl group, and the remaining one may be a C₁-C₁₄ alkyl group.
In an embodiment, in Formula 1, any two of R₁ to R₄ may each independently be C₁-C₃ alkoxy groups, any one may be a methyl group an ethyl group, or a branched butyl group, and the remaining one may be a C₃-C₁₄ alkyl group.
In an embodiment, the silane compound of Formula 1 may include diisobutyldimethoxysilane and/or diethoxydimethylsilane.In an embodiment, the silane compound of Formula 1 may be diisobutyldimethoxysilane or diethoxydimethylsilane.

In an embodiment, the refrigeration oil composition may include the silane compound represented by Formula 1 in an amount of 0.1% by weight ("wt%") to 10 wt% based on the total weight of the refrigeration oil composition. Accordingly, side reactions caused by moisture present inside a system such as an air-conditioning system can be prevented or suppressed without degrading the performance of the refrigeration oil. Furthermore, deterioration of a composition for refrigerator including the refrigeration oil composition, which may act as a working fluid within the system, can be prevented, thereby allowing the composition to maintain long-term reliability.

The content of the silane compound represented by Formula 1 in the refrigeration oil composition may be, for example, 0.5 wt% to 9.5 wt%, 1.0 wt% to 7.0 wt%, 1.0 wt% to 5.5 wt%, or 1.5 wt% to 3.5 wt%.

As a non-limiting example, the silane compound may be prepared by a reaction between a Grignard reagent and an alkoxyalkylsilane or by a hydrosilylation reaction in the presence of a metal catalyst, or may be obtained from a commercial reagent supplier, but is not limited thereto.

In an embodiment, the refrigeration oil composition may further include at least one of a base oil and an additive.

In an embodiment, the refrigeration oil composition may include the base oil in an amount of 87 wt% to 99 wt% based on the total weight of the refrigeration oil. Accordingly, the refrigeration oil composition may effectively form a lubricating film between metal contact surfaces during reciprocating or rotational motion of a compressor or a similar component within the above-described system, thereby reducing friction and wear.

The content of the base oil in the refrigeration oil composition may be, for example, 85 wt% to 96 wt% or 88 wt% to 96 wt%.

In an embodiment, the base oil may include at least one selected from the group consisting of, for example, polyol ester, polyalkylene glycol, polycarbonate, alkylbenzene, polyvinyl ether, polyether, and perfluoropolyether.

In an embodiment, the refrigeration oil may comprise a silane compound in an amount of 0.1% by weight to 10% by weight based on the total weight of the refrigeration oil, and a base oil in an amount of 87% by weight to 99% by weight based on the total weight of the refrigeration oil, and the silane compound is represented by Formula 1, wherein, in Formula 1, any two of R₁ to R₄ are each independently C₁-C₃ alkoxy groups, any one is a methyl group or an ethyl group, and the remaining one is a C₃-C₁₄ alkyl group.

In an embodiment, the refrigeration oil composition may include the additive in an amount of 0.1 wt% to 15 wt% based on the total weight of the refrigeration oil composition.

The additive may include, for example, at least one of a stabilizer, an antioxidant, a corrosion inhibitor, an acid scavenger, an extreme-pressure additive, and an anti-wear agent.

The stabilizer may include at least one selected from the group consisting of paraffin, naphthene, aromatic hydrocarbon, benzene or naphthalene unsubstituted or substituted with a linear or branched alkyl group, polyvinylpyrrolidone, and dibenzyl toluene.

The alkyl-substituted naphthalene may be referred to as an alkylated naphthalene, and may include, for example, monoalkyl naphthalene, dialkyl naphthalene, trialkyl naphthalene, tetraalkyl naphthalene, or a mixture thereof.

In an embodiment, the additive may include at least one of an antioxidant, a corrosion inhibitor, an acid scavenger, an extreme-pressure additive, and an anti-wear agent to improve the stability, wear resistance, and heat resistance of the refrigeration oil composition.

In an embodiment, the antioxidant may include at least one selected from phenol-based antioxidants, amine-based antioxidants, phosphorus-based antioxidants, and sulfur-based antioxidants.

The antioxidant may include, for example, a phenol-based antioxidant such as 2,6-dibutylphenol; amine-based antioxidants such as phenylamine, diphenylamine, and naphthylamine; phosphorus-based antioxidants such as trialkyl phosphites, trialkyl phosphates, and trialkyl phosphines; and sulfur-based antioxidants such as pentaerythrityl tetrakis(3-laurylthiopropionate), dilauryl thiodipropionate, distearyl thiodipropionate, and/or ditridecyl thiodipropionate and dimyristyl thiodipropionate.

In an embodiment, the corrosion inhibitor may include at least one selected from thiazole compounds, triazole compounds, and thiadiazole compounds.

In an embodiment, the acid scavenger may improve stability by capturing acidic impurities that may be present in the refrigeration oil or the composition for a refrigerator.

The acid scavenger may include, for example, a glycidyl ether compound such as triglycidyl ether, diglycidyl ether, glycidyl ether, lauryl glycidyl ether, and/or ethylhexyl glycidyl ether.

In an embodiment, the extreme-pressure additive may reduce friction and wear by preventing direct contact between metals.

The extreme-pressure additive may include, for example, an organosulfur-based extreme-pressure additive, a phosphorothioate ester-based extreme-pressure additive, an ester-based extreme-pressure additive, an organochlorine-based extreme-pressure additive, an organofluorine-based extreme-pressure additive, an alcohol-based extreme-pressure additive, or a metal compound-based extreme-pressure additive. The organosulfur-based extreme-pressure additive may include monosulfides, polysulfides, sulfoxides, sulfones, thiosulfinates, sulfurized oils, thiocarbonates, thiophenes, thiazoles, or methanesulfonates. The ester-based extreme-pressure additive may include higher fatty acids, hydroxyaryl fatty acids, polyol esters, or acrylates. The organochlorine-based extreme-pressure additive may include chlorinated hydrocarbons or chlorinated carboxylic acid derivatives. The organofluorine-based extreme-pressure additive may include fluorinated aliphatic carboxylic acids, fluoroethylene resins, fluoroalkyl polysiloxanes, or fluorinated graphite. The metal compound-based extreme-pressure additive may include naphthenates (e.g., lead naphthenate), fatty acid salts (e.g., lead fatty acid salts), thiophosphates (e.g., zinc dialkyldithiophosphate), thiocarbamates, organic molybdenum compounds, organic tin compounds, or organic germanium compounds.

In an embodiment, the anti-wear agent may include a phosphate-based anti-wear agent. The phosphate-based anti-wear agent may include at least one selected from trialkyl phosphates and triaryl phosphates, for example, tributyl phosphate, tripentyl phosphate, trihexyl phosphate, triphenyl phosphate, tris(methylphenyl) phosphate, and/or tricresyl phosphate.

In an embodiment, the refrigeration oil composition may include the silane compound represented by Formula 1, the base oil, the stabilizer, the acid scavenger, and the anti-wear agent.

As non-limiting examples, the refrigeration oil composition may further include antifoaming agents, load-carrying additives, chlorine scavengers, detergent-dispersants, viscosity index improvers, oiliness agents, rust inhibitors, and pour-point depressants. For example, the antifoaming agent may be a homopolymer or a copolymer of an acrylate ester.

In an embodiment, the refrigeration oil composition may have a total acid number (TAN) of 1 mg KOH/g or less, measured according to the ASTM D664 test method after performing a high-temperature stability evaluation under temperature conditions of 140 °C to 160 °C in accordance with the ASHRAE Standard 97 test method. ASTM D664 is an ASTM standard that specifies a test method for measuring the acid number of refrigeration oil compositions.

The total acid number may be, for example, 0.8 mg KOH/g or less, 0.7 mg KOH/g or less, or less than 0.5 mg KOH/g. Accordingly, the refrigeration oil may exhibit improved operational stability.

In an embodiment, the refrigeration oil composition may have a color index of 1 or less, measured according to the ASTM D1500 test method after performing a high-temperature stability evaluation under temperature conditions of 140 °C to 160 °C in accordance with the ASHRAE Standard 97 test method. The ASTM D1500 test method is an ASTM standard used to measure the color of refrigeration oil compositions and may be referred to as the ASTM Color Scale.

The color index may be, for example, less than 0.5. Accordingly, the refrigeration oil composition may exhibit improved high-temperature stability.

The high-temperature stability evaluation under temperature conditions of 140 °C to 160 °C according to the ASHRAE Standard 97 test method may be performed, for example, in a sealed container in the presence of a metal catalyst. The metal catalyst may include, for example, a transition metal catalyst or a non-metal catalyst. Non-limiting examples of the metal catalyst may include copper (Cu), aluminum (Al), and iron (Fe) catalysts.

The high-temperature stability evaluation may be carried out, for example, by placing the refrigeration oil composition, a refrigerant, and a metal catalyst in a sealed container and maintaining the container at a temperature of 140 °C to 160 °C for about 10 to 15 days. For example, the temperature may be set to 145 °C to 155 °C, and the duration may be set to 13 to 15 days.

For example, the refrigerant may include CF₃I.

For example, after the high-temperature stability evaluation, the sealed container may be left at room temperature to cool. The refrigerant may then be removed from the mixture of the refrigeration oil composition and the refrigerant taken from the sealed container. As a non-limiting example, the refrigerant may be removed by depressurization and/or nitrogen bubbling. The refrigeration oil composition from which the refrigerant had been removed may be tested for its total acid number according to the ASTM D664 test method or its color index according to the ASTM D1500 test method.

The refrigeration oil composition according to an embodiment of the present disclosure may be used, for example, in household and/or industrial refrigerators, cold storage facilities, refrigeration devices, household and/or commercial air conditioners, automotive air-conditioning systems, vapor-compression heat pumps, data centers, and/or server cooling systems.

### < Refrigerant Composition>

The refrigerant composition according to an embodiment of the present disclosure includes the above-described refrigeration oil composition and a refrigerant including CF₃I.

In an embodiment, the refrigerant may further include a refrigerant other than CF₃I.

For example, the refrigerant composition may include CF₃I alone as the refrigerant, or may include CF₃I and another type of refrigerant together.

In an embodiment, the refrigerant other than CF₃I may include at least one selected from the group consisting of hydrofluorocarbon (HFC)-based refrigerants, hydrofluoroolefin (HFO)-based refrigerants, and hydrochlorofluorocarbon (HCFC)-based refrigerants.

The hydrofluorocarbon (HFC)-based refrigerant may include difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethyl methyl ether (RE143a), trifluoromethane (R-23), fluoroethane (R-161), octafluoropropane (R-218), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), octafluorocyclobutane (RC318), and 1,1,1,3,3-pentafluorobutane (R-365mfc).

The hydrofluoroolefin (HFO)-based refrigerant may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye).

The hydrochlorofluorocarbon (HCFC)-based refrigerant may include difluorochloromethane (R-22), chlorotetrafluoroethane (R-124), and 1-chloro-1,1-difluoroethane (R-142b).

In an embodiment, the content of CF₃I may be 0.1 wt% to 100 wt% based on the total weight of the refrigerant, and may be, for example, 10 wt% or more, 20 wt% or more, 30 wt% or more, 40 wt% or more, 50 wt% or more, or 60 wt% or more.

In an embodiment, the weight ratio of the refrigeration oil composition to the refrigerant in the composition for refrigerator may be 1:9 to 9:1.

### <Heat pump>

A heat pump according to an embodiment of the present disclosure includes the above-described refrigeration oil composition. Accordingly, the heat pump may exhibit improved heat transfer characteristics and oxidation stability at high-temperature.

In an embodiment, the refrigeration oil composition may circulate as a mixture with the refrigerant in at least a portion of the compressor within the heat pump.

The heat pump may include a compressor, a condenser, an expansion valve, and an evaporator, and the condenser and evaporator may each function as a heat exchanger.

The refrigerant composition may be compressed in the compressor to form a high-temperature, high-pressure gas. The refrigerant composition may then release heat in the condenser and may be condensed into a liquid state. Thereafter, the refrigerant composition may pass through the expansion valve, where it expands into a low-temperature, low-pressure state, and subsequently absorbs external heat in the evaporator to vaporize into a gaseous state.

The condenser and the evaporator may function as heat exchangers that exchange heat through the refrigerant composition, and the process of releasing or absorbing heat as the refrigerant circulates within the heat pump may be repeated.

The heat pump may perform cooling or heating functions depending on the operating mode. In the cooling mode, the heat pump may discharge indoor heat to the outside, and in the heating mode, it may transfer outdoor heat to the inside.

In some embodiments, the coefficient of performance (COP) of the heat pump may range from 1 to 10. The coefficient of performance (COP) refers to the ratio of the effective amount of heat obtained to the energy input during the operation of the heat pump. Accordingly, by using the above-described refrigerant composition, a high-efficiency heat pump having a COP within the range of 1 to 10 may be provided.

The heat pump may be applicable to various fields, including residential, commercial, and industrial applications, and may operate efficiently over a wide operating temperature range from -20 °C to 50 °C.

FIGS. 1 and 2 are schematic diagrams illustrating the flow of a refrigerant composition for heat exchange in a heat exchanger within the heat pump in a cooling mode or a heating mode, respectively, according to an embodiment.

In FIGS. 1 and 2, the arrows indicate the flow direction of the refrigerant composition.

Referring to FIG. 1, in the cooling mode, the refrigerant composition is compressed through a compressor 60, bypasses an internal condenser 70 and an expansion valve (heating) 22, releases heat in an external condenser 10, then passes through an expansion valve (cooling) 21 where it expands, and reabsorbs heat through an evaporator 40.

For example, in the cooling mode, the refrigerant composition may be compressed, raising its pressure and temperature. This may prepare the refrigerant composition to release heat when it moves into an external condenser. Since the system may be in the cooling mode, the refrigerant composition may skip the internal condenser 70 and the expansion valve(heating) 22, thereby allowing the cycle to focus on rejecting heat outdoors and absorbing heat indoors. The hot, high-pressure refrigerant composition may then flow into the external condenser 10, where it releases heat to the outdoor air. As a result, the refrigerant composition may cool down and condense into a liquid. Then, the liquid refrigerant composition may pass through the expansion valve(cooling) 21 and may expand, dropping in pressure and temperature. This may prepare the refrigerant composition to absorb heat. The cold, low-pressure refrigerant composition may enter an evaporator coil, and it may absorb heat from indoor air, cooling the space. The refrigerant composition may evaporate back into a gas, completing the cycle.

Referring to FIG. 2, in the heating mode, the refrigerant composition is compressed through the compressor 60, releases heat in the internal condenser 70, expands through an expansion valve (heating) 22, absorbs heat from the external condenser 10, and then further absorbs heat through a cooler 30.

For example, in the heating mode, the refrigerant composition may be first compressed by the compressor 60, which may raise its pressure and temperature so that it can release heat effectively. The refrigerant composition then may flow into the internal condenser 70, where the hot refrigerant composition may transfer its energy to the space to be heated, warming the space as it may condense into a liquid. From there, the refrigerant composition may pass through the expansion valve(heating) 22, which may reduce its pressure and temperature, preparing it to absorb heat. The refrigerant composition may enter the external condenser 10, which in the heating mode functions as an evaporator, allowing the refrigerant composition to draw heat from the outdoor air even in cold conditions. Then, the refrigerant composition may move through a cooler 30, where it may absorb additional heat to maximize efficiency before returning to the compressor 60. This cycle may ensure that heat may be continuously extracted from the outside environment and delivered indoors, with the cooler providing an extra stage of absorption that may enhance performance and reliability. Meanwhile, referring to FIGS. 1 and 2, the system including the heat pump may further include a valve 20, a motor inverter 35, an accumulator 50, a PTC heater 80, and a battery 90, and these components may be disposed so as to be fluidly or electrically connected to the system components.

By way of non-limiting example, the valve 20 may be configured to selectively switch a flow path of the refrigerant composition, and may be disposed to control a flow direction of the refrigerant composition when switching between the cooling mode and the heating mode. The accumulator 50 may be configured to temporarily store the refrigerant composition or to perform gas-liquid separation, and may be disposed to stabilize a state of the refrigerant composition flowing into the compressor 60.

In addition, the motor inverter 35 may be a power conversion device configured to control driving of the compressor 60, and may be configured to adjust a rotational speed and output of the compressor according to required conditions. The PTC heater 80 may be disposed as an auxiliary heating means configured to provide additional heating when necessary, thereby supplementing heating performance. The battery 90 may be electrically connected to the system as a power supply device configured to supply power to the compressor 60, the motor inverter 35, and the PTC heater 80.

**As** described above, each component illustrated in FIGS. 1 and 2 may operate in conjunction with one another during operation of the heat pump system in the cooling mode and the heating mode, so that the heat exchange cycle of the refrigerant composition may be stably and efficiently performed.

Hereinafter, the embodiments of the present disclosure will be further described with reference to specific experimental examples.

### Examples 1 to 5 and Comparative Examples 1 to 6

Refrigeration oil compositions according to Examples 1 to 5 and Comparative Examples 1 to 6 were prepared by mixing the components in their respective amounts, listed in Table 1 below. The specific types of silane compounds included in each refrigeration oil composition are shown in Table 2 below.

**[TABLE 1]**

| | Refrigeration Oil | | | | |
|---|---|---|---|---|---|
| Component | Silane compound | Polyol ester | Alkylated naphthalene | Tris(methylphenyl) phosphate | Phosphate 2-ethylhexyl glycidyl ether |
| Content (wt%) | 3 | 91 | 3 | 1.5 | 1.5 |

The components listed in Table 1 above are specifically as follows:
- Base oil: Polyol ester (POE) (Synative ES 4068, BASF)
- Stabilizer: Alkylated naphthalene (Synesstic 5, ExxonMobil)
- Anti-wear agent: Tris(methylphenyl) phosphate (RC 3661, Lanxess)
- Acid scavenger: 2-ethylhexyl glycidyl ether (CAS No. 2461-15-6)

**[TABLE 2]**

| | Silane Compound |
|---|---|
| Example 1 | Dimethoxy(methyl)-n-octylsilane |
| | 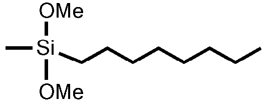 |
| Example 2 | Methoxy(dimethyl)-n-octylsilane |
| | 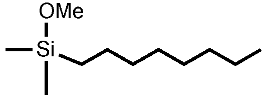 |
| Example 3 | Diisobutyldimethoxysilane |
| | 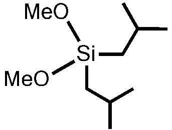 |
| Example 4 | Diethoxydimethylsilane |
| | 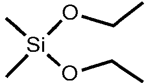 |
| Example 5 | Dibutyldimethoxysilane |
| | 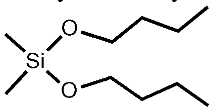 |
| Comparative Example 1 | Vinyltriethoxysilane |
| | 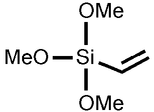 |
| Comparative Example 2 | (N,N-Dimethylaminopropyl)trimethoxysilane |
| | 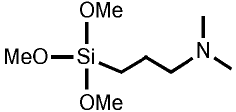 |
| Comparative Example 3 | Tris(trimethylsilyl)silane |
| | 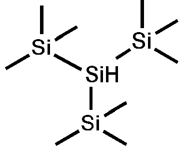 |
| Comparative Example 4 | Tetramethyl orthosilicate |
| | 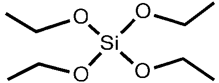 |
| Comparative Example 5 | Phenyltrimethoxysilane |
| | 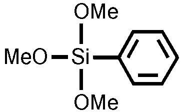 |
| Comparative Example 6 | Cyclohexyldimethylmethoxysilane |
| | 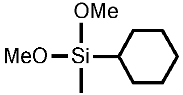 |

### Experimental Example

### Experimental Example 1: Total acid number (TAN)

100 parts by weight of each refrigeration oil composition prepared according to the examples and comparative examples described above was mixed with 100 parts by weight of CF₃I as a refrigerant to prepare a test refrigerant composition for high-temperature stability evaluation according to the ASHRAE Standard 97 test method. The high-temperature stability evaluation for each test composition was conducted as follows.

The test composition was placed in a container (tube) together with copper (Cu), aluminum (Al), and iron (Fe) catalysts, and the container was sealed to prevent leakage or contamination. Specifically, high-purity copper, aluminum alloy Al3003, and carbon steel were used as the Cu, Al, and Fe catalysts, respectively. The sealed container was then stored in a thermostatically controlled environment at approximately 150 °C, and this elevated temperature was maintained continuously and uniformly throughout the entire test period. The container remained under the constant thermal conditions for about 14 days without interruption, ensuring that the refrigerant-oil mixture and the catalysts were subjected to sustained high-temperature exposure for the duration of the stability evaluation.

**.** The sealed container was stored at about 150 °C for about 14 days.

Afterward, the sealed container was allowed to cool to room temperature, and the test composition was taken out of the container.

The CF₃I was removed from the test composition by depressurization and nitrogen bubbling. Specifically, CF₃I was removed from the test composition through a two-step process including depressurization and nitrogen bubbling. First, volatile CF₃I was separated from the refrigeration oil by depressurization. Thereafter, nitrogen gas was passed through the composition in the form of bubbles to further remove any residual CF₃I. Through this procedure, a purified refrigeration oil sample suitable for acid number determination was obtained.

The total acid number (TAN) of the refrigerant composition from which CF₃I had been removed was then measured using a 686 Titroprocessor (Metrohm) in accordance with ASTM D664.

A lower TAN value indicates higher oxidation stability of the refrigerant composition.

The results are shown in Table 3 below.

### Experimental Example 2: ASTM color index

Each refrigeration oil prepared according to the examples and comparative examples described above was subjected to a stability evaluation at high-temperature according to the ASHRAE Standard 97 test method under the same procedure and conditions as in Experimental Example 1.

Afterward, the sealed container was allowed to cool to room temperature, and the test composition was taken out from the container.

CF₃I was removed from the test composition by depressurization and nitrogen bubbling. Specifically, CF₃I was removed from the test composition through a two-step process including depressurization and nitrogen bubbling. First, volatile CF₃I was separated from the refrigeration oil by depressurization. Thereafter, nitrogen gas was passed through the composition in the form of bubbles to further remove any residual CF₃I. Through this procedure, a purified refrigeration oil sample suitable for ASTM color index measurement was obtained.

The color index of the refrigerant composition from which CF₃I had been removed was then evaluated using a LICO 500 Spectral Colorimeter (HACH LANGE) in accordance with ASTM D1500.

Specifically, each refrigerant composition was placed in a test tube and compared with standard color glass, and the closest matching standard color number was recorded. If the color did not exactly match a standard value, the number corresponding to the nearest darker shade was selected.

The ASTM color index ranges from 0.5 to 8.0 as standard color numbers, and a smaller color change indicates higher chemical stability of the refrigerant composition.

The results are shown in Table 3 below.

**[TABLE 3]**

| | Temperature (°C) | Total Acid Number (TAN) | ASTM Color Index |
|---|---|---|---|
| Example 1 | 150 | 0.62 | < 0.5 |
| Example 2 | 150 | 0.74 | < 0.5 |
| Example 3 | 150 | 0.34 | < 0.5 |
| Example 4 | 150 | 0.42 | < 0.5 |
| Example 5 | 150 | 0.64 | < 0.5 |
| Comparative Example 1 | 150 | 67.5 | > 8 (discolored) |
| Comparative Example 2 | 150 | Not measurable due to precipitate formation | > 8 (discolored) |
| Comparative Example 3 | 150 | Not measurable due to precipitate formation | > 8 (discolored) |
| Comparative Example 4 | 150 | 84.7 | > 8 (discolored) |
| Comparative Example 5 | 150 | 4.39 | < 0.5 |
| Comparative Example 6 | 150 | Not measurable due to precipitate formation | > 8 (discolored) |

Referring to Table 3, after the stability evaluation at high-temperature using the ASHRAE Standard 97 test method, the refrigerant compositions according to the examples exhibited lower total acid numbers (TAN) and ASTM color indices than those of the refrigerant compositions according to the comparative examples.

As in the comparative examples, when the silane compound had three or more alkoxy groups bonded to the Si atom, lacked alkoxy or C₁-C₁₄ alkyl groups, or contained aminoalkyl groups, precipitates were formed or discoloration occurred after the high-temperature stability evaluation using the ASHRAE Standard 97 test method.

These experimental results show that the refrigeration oils according to the embodiments exhibit enhanced high-temperature stability, producing fewer acidic degradation products and maintaining better visual/chemical quality than comparative oils.

## Claims

1. A refrigeration oil composition comprising a silane compound represented by Formula 1 below: 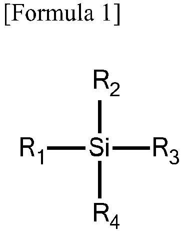 (in Formula 1, any one or two of R₁ to R₄ are each independently selected from C₁-C₅ alkoxy groups, and the remaining groups are each independently C₁-C₁₄ alkyl groups).

2. The refrigeration oil composition according to claim 1, wherein in Formula 1, any one or two of R1 to R4 are each independently selected from the group consisting of methoxy and ethoxy groups.

3. The refrigeration oil composition according to claims 1 or 2, wherein in Formula 1, any one or two of the remaining groups are methyl groups, ethyl groups, or propyl groups.

4. The refrigeration oil composition according to any one of claims 1 to 3, wherein in Formula 1, any two of R₁ to R₄ are each independently selected from C₁-C₃ alkoxy groups, and the remaining two are each independently C₁-C2 linear alkyl groups or C₃-C₇ branched alkyl groups.

5. The refrigeration oil composition according to any one of claims 1 to 4, wherein the refrigeration oil composition includes the silane compound represented by Formula 1 in an amount of 0.1% by weight to 10% by weight based on the total weight of the refrigeration oil composition.

6. The refrigeration oil composition according to any one of claims 1 to 5, further comprising at least one of a base oil and an additive.

7. The refrigeration oil composition according to claim 6, wherein the base oil is included in an amount of 87% by weight to 99% by weight based on the total weight of the refrigeration oil composition.

8. The refrigeration oil composition according to claims 6 or 7, wherein the base oil includes at least one selected from the group consisting of polyol ester, polyalkylene glycol, polycarbonate, alkylbenzene, polyvinyl ether, polyether, and perfluoropolyether, and/or
wherein the additive comprises at least one of a stabilizer, an antioxidant, a corrosion inhibitor, an acid scavenger, an extreme-pressure additive, and an anti-wear agent, optionally wherein the additive comprises the stabilizer, the acid scavenger, and the anti-wear agent.

9. The refrigeration oil composition according to any one of claims 1 to 8, wherein the total acid number (TAN) is 1 mg KOH/g or less, measured according to the ASTM D664 test method after performing a high-temperature stability evaluation under temperature conditions of 140 °C to 160 °C in accordance with the ASHRAE Standard 97 test method.

10. The refrigeration oil composition according to any one of claims 1 to 9, wherein the color index is 1 or less, measured according to the ASTM D1500 test method after performing a high-temperature stability evaluation under temperature conditions of 140 °C to 160 °C in accordance with the ASHRAE Standard 97 test method.

11. A refrigerant composition comprising:
the refrigeration oil composition according to any one of claims 1 to 10; and
a refrigerant comprising CF₃I.

12. The refrigerant composition according to claim 11, wherein the refrigerant further includes a refrigerant other than CF₃I.

13. A heat pump comprising or operated with the refrigerant composition according to claim 11 or 12.

14. Use of the refrigeration oil composition according to any one of claims 1 to 10 for removing acid and/or water formed in the refrigerant composition of claim 11 or 12, for improving oxidation stability at high-temperature, heat transfer characteristics, and/or long-term reliability.
